# EUROPÄISCHE PATENTSCHRIFT

(11) **EP 4 006 391 B1**
(45) Veröffentlichungstag und Bekanntmachung des Hinweises auf die Patenterteilung: **29.10.2025**
(21) Anmeldenummer: 21203742.8
(22) Anmeldetag: 20.10.2021
(51) Int. Cl.: F16K 11/20, F16K 11/22, F16K 27/04, F25B 41/20, F25B 41/26

(54) **MEHRWEGEVENTIL FÜR EINE STEUERUNG EINES KÄLTEMITTELKREISLAUFES**
MULTIWAY VALVE FOR CONTROLLING A REFRIGERANT CIRCUIT
SOUPAPE À VOIES MULTIPLES POUR COMMANDER UN CIRCUIT DE FLUIDE FRIGORIGÈNE

(30) Priorität: 27.11.2020 DE 102020131446
(43) Veröffentlichungstag der Anmeldung: 01.06.2022
(73) Patentinhaber: Otto Egelhof GmbH & Co. KG, 70736 Fellbach (DE)
(72) Erfinder: BOHNENSTENGEL, Peter, 73730 Esslingen (DE); DORN, Christian, 73732 Esslingen (DE); EHMEN, Andreas, 26389 Wilhelmshaven (DE); KÖSTLER, Hans, 73635 Rudersberg (DE); LESCHERT, Frank, 73773 Aichwald (DE); MAURER, Rainer, 71522 Backnang (DE); VON RAD, Volker, 73732 Esslingen (DE); SCHAUWECKER, Kai, 70734 Fellbach (DE)
(74) Vertreter: Mammel und Maser Patentanwälte PartG mbB

(56) Entgegenhaltungen:
- WO-A1-2019/169650
- WO-A1-85/03983
- CN-U- 207 989 811
- DE-U1- 202012 102 798
- FR-A1- 2 582 418
- JP-A- 2012 036 933
- JP-A- 2013 015 227
- JP-B2- 6 689 418
- US-A- 1 489 396
- US-A- 4 286 624
- US-A- 4 312 372
- US-A- 4 349 149

## Beschreibung

Die Erfindung betrifft ein Mehrwegeventil für eine Steuerung eines Kältemittelkreislaufes mit einer Kälteanlage mit einer Wärmepumpenfunktion.

Aus der DE 10 2017 102 841 A1 ist ein Mehrwegeventil zur Steuerung eines Kältemittelkreislaufes bekannt. Dieses Mehrwegeventil umfasst ein Gehäuse, in welchem eine Drehschieberanordnung vorgesehen ist, welche über eine Welle, die von einem Motor angetrieben ist, verschiedene Schaltstellungen ansteuert. Das Gehäuse umfasst eine erste Einlassöffnung, die durch einen ersten Fluidkanal mit einem Regulierraum verbunden ist. Eine zweite Anschlussöffnung im Gehäuse ist mit einem zweiten Fluidkanal zum Regulierraum verbunden. Ein dritter und vierter Fluidkanal führt vom Regulierraum jeweils zu einer Auslassöffnung. Durch ein solches Mehrwegeventil können mehrere Schaltpositionen und eine Serviceposition zur Ansteuerung des Kältemittelkreislaufes angesteuert werden. Bei dieser Ausführungsform besteht das Gehäuse aus einer ersten Gehäusehälfte und einer zweiten Gehäusehälfte, um die Drehschieberanordnung im Regulierraum zu positionieren und durch die Welle anzusteuern.

Aus der DE 20 2012 102 798 U1 ist ein Mehrwegventil zur Steuerung eines Kältemittelkreislaufs bekannt. Dieses Mehrwegventil umfasst ein Gehäuse mit einem ersten Anschluss und einem zweiten Anschluss, die jeweils in einen Regulierraum münden. Durch eine erste Drehscheibe in dem ersten Regulierraum und eine zweite Drehscheibe in dem zweiten Regulierraum, die aneinander anliegen, kann eine abfließende Strömung direkt auf eine oder mehrere Auslässe verteilt angesteuert werden.

Aus der US 1 489 396 A ist ein Luftventil bekannt, bei welchem mittels zwei Steuerhebeln jeweils eine Steuerscheibe ansteuerbar ist, um eine Luftverteilung anzusteuern.

Aus der WO 2019/169650 A1 ist ein Mehrwegventil bekannt. Dieses Mehrwegventil umfasst ein Gehäuse mit einer ersten Anschlussseite, welche mehrere kreisförmig angeordnete Zuflüsse aufweist und eine zweite Anschlussseite, welche ebenfalls kreisförmig angeordnete Zuflüsse aufweist. Durch ein rechtes und ein linkes Ventil ist ermöglicht, dass ein rechter Zufluss und ein linker Zufluss derart ausgewählt und angesteuert werden, dass das Fluid über einen gemeinsamen Abfluss abströmt.

Der Erfindung liegt die Aufgabe zugrunde, ein Mehrwegeventil vorzuschlagen, welches einen einfachen Aufbau und eine individuelle Ansteuerung von mehreren Schaltpositionen für einen Kältemittelkreislauf ermöglicht.

Diese Aufgabe wird durch ein Mehrwegeventil zur Steuerung des Kältemittelkreislaufes der Kälteanlage mit Wärmepumpenfunktion gemäß dem Anspruch 1 gelöst, welches ein Gehäuse umfasst, das zwei einander gegenüberliegende oder zwei aneinander zugeordnete Stirnseiten aufweist, die jeweils eine Einstecköffnung umfassen, an die sich ein Regulierraum anschließt, in welchen jeweils eine Mehrwegeventilanordnung einsetzbar ist, die zumindest einen Grundkörper und eine Drehschieberanordnung umfasst. Das Gehäuse weist jeweils eine dem Regulierraum zugeordnete Anschlussöffnung auf und zumindest zwei weitere Anschlussöffnungen, die zwischen den beiden Drehschieberanordnungen der Mehrwegeventilanordnungen vorgesehen sind. Durch diese Anordnung kann das Gehäuse einteilig ausgebildet sein. Dies weist einen konstruktiv einfachen Aufbau auf. Des Weiteren weist dieses Mehrwegeventil den Vorteil auf, dass zwei Mehrwegeventilanordnungen einander gegenüberliegend in dasselbe Gehäuse einsetzbar sind. Die Ausgestaltung der Mehrwegeventilanordnungen kann vereinfacht ausgebildet sein, und dennoch ist ermöglicht, dass beispielsweise bis zu sechs Schaltpositionen und vorzugsweise eine Serviceposition einstellbar und ansteuerbar sind.

Vorteilhafterweise sind zwei einander gegenüberliegende Regulierräume im Gehäuse des Mehrwegeventils in einer gemeinsamen Längsachse ausgerichtet. Die jeweils in die Regulierraum einsetzbaren Mehrwegeventilanordnungen sind bevorzugt spiegelbildlich in dem Gehäuse zueinander ausgerichtet. Dadurch können der Aufbau und insbesondere die Anordnung von Kanälen zwischen den beiden Regulierräumen vereinfacht sein. Alternativ kann vorgesehen sein, dass die beiden Längsachsen der Regulierräume in einem Winkel zwischen 90° bis 179°, vorzugsweise 135° bis 179°, zueinander ausgerichtet sind.

Des Weiteren ist bevorzugt jede Einstecköffnung im Gehäuse jeweils durch einen Grundkörper der Mehrwegeventilanordnung geschlossen. Dadurch ist nach dem Einsetzen dieser Mehrwegeventilanordnung zum Gehäuse eine druckdichte Anordnung geschaffen.

Die Drehschieberanordnungen der Mehrwegeventilanordnungen sind bevorzugt jeweils mit einer Welle angetrieben, und die Wellen liegen bevorzugt in einer gemeinsamen Achse. Dadurch kann ein vereinfachter Aufbau des Mehrwegeventils ermöglicht sein. Des Weiteren sind die Regulierräume mit zwei Kanälen verbunden. Diese Kanäle erstrecken sich zwischen den beiden in den Regulierräumen angeordneten Drehschieberanordnungen. Bevorzugt sind die Regulierräume einander gegenüberliegend, wobei beide Kanäle koaxial zur Längsachse des Gehäuses angeordnet sind.

Des Weiteren ist bevorzugt der zumindest eine in den Regulierraum mündende Anschluss tangential zum Regulierraum ausgerichtet. Der Anschluss ist somit dezentral zum Regulierraum ausgerichtet. Dadurch können eine Strömungsoptimierung und ein geringer Druckverlust des Kältemittels beim Einströmen des Kältemittels in den Regulierraum des Mehrwegeventils erzielt werden.

Gemäß einer bevorzugten Ausführungsform des Gehäuses für das Mehrwegeventil sind der zumindest eine in den Regulierraum mündende Anschluss und der zumindest eine zwischen den beiden Regulierräumen vorgesehene Anschluss in dieselbe Richtung am Gehäuse ausgerichtet. Dadurch kann ein vereinfachter Einbau vorgesehen sein.

Bevorzugt weist das Gehäuse zumindest abschnittsweise einen rechteckförmigen Querschnitt auf und den zumindest einen in den Regulierraum mündenden Anschluss, wobei die zwischen den beiden Regulierräumen vorgesehenen und in die Kanäle mündenden Anschlüsse zur selben Seitenfläche des Gehäuses ausgerichtet sind. Vorzugsweise ist der zumindest eine Anschluss für den weiteren Regulierraum zu einer benachbarten oder gegenüberliegenden Seitenfläche des Gehäuses ausgerichtet. Dies ermöglicht eine verbesserte Einbausituation und Anschlussmöglichkeit an weitere Komponenten des Kältemittelkreislaufes, wie beispielsweise an einem Chiller bei einer Batteriekühlung oder einem Verdampfer für eine Klimatisierung.

Jede Mehrwegeventilanordnung des Mehrwegeventils weist bevorzugt einen Antrieb auf, der eine die Drehschieberanordnung ansteuernde Welle antreibt. Dadurch kann jede Mehrwegeventilanordnung in den jeweiligen Schaltpositionen angesteuert und vorzugsweise aufeinander abgestimmt werden.

Bevorzugt ist eine gemeinsame Steuerung vorgesehen, durch welche die beiden Mehrwegeventilanordnungen ansteuerbar sind. Durch die Kombination der einzelnen Schaltstellungen jeder Mehrwegeventilanordnung kann bei konstruktiv einfacher Ausgestaltung der Drehschieberanordnung eine Vielzahl von Schaltpositionen angesteuert werden.

Die Antriebe der Mehrwegeventilanordnungen sind bevorzugt als flach rechteckförmige Gehäuse ausgebildet. Eine Längsachse der Gehäuse ist abweichend zu der Seitenfläche des Gehäuses ausgerichtet, welche die Mehrzahl der Anschlüsse aufweist. Dies ermöglicht eine Anschlussoptimierung.

Bevorzugt ist zumindest eine Seitenfläche des Gehäuses frei von Anschlüssen. Dadurch kann eine Montageschnittstelle gegeben sein.

Bei dem Mehrwegeventil ist bevorzugt der eine zum Regulierraum mündende Anschluss bei allen einstellbaren Schaltstellungen als Einlass für das Kältemittel ansteuerbar und vorzugsweise die erste Mehrwegeventilanordnung zur Hochdruckseite des Gehäuses angeordnet. Die erste Mehrwegeventilanordnung ist bevorzugt auf die im Regulierraum herrschenden Druckverhältnisse entsprechend ausgelegt.

Die der ersten Mehrwegeventilanordnung gegenüberliegende zweite Mehrwegeventilanordnung ist bevorzugt auf einer Niederdruckseite des Gehäuses angeordnet. Da auf der Niederdruckseite des Gehäuses andere Strömungsverhältnisse ausgebildet sind als auf der Hochdruckseite, kann die Drehschieberanordnung der zweiten Mehrwegeventilanordnung entsprechend daran angepasst sein.

Zur Vereinfachung im Aufbau des Mehrwegeventils weisen bevorzugt die erste und zweite Mehrwegeventilanordnung eine Anschlussstelle für den Antrieb und vorzugsweise denselben Antrieb auf. Insbesondere kann auch der Grundkörper der beiden Mehrwegeventilanordnungen gleich ausgestaltet sein.

Des Weiteren weisen bevorzugt die erste und zweite Mehrwegeventilanordnung zwischen dem Grundkörper und der Drehschieberanordnung einen Mitnehmer auf, der durch die Welle drehbar angesteuert ist und jeweils eine Steuerscheibe der Drehschieberanordnung drehbar ansteuert. Dadurch kann der prinzipielle Aufbau einer solchen Drehschieberanordnung für beide Mehrwegeventilanordnungen beibehalten werden. Insbesondere sind die Steuerscheiben der Drehschieberanordnung aufeinander abgestimmt, sodass diese ohne zusätzliche Dichtungen in verschiedenen Schaltstellungen dichtend aneinander liegen können.

Gemäß einer weiteren bevorzugten Ausführungsform ist vorgesehen, dass die erste Mehrwegeventilanordnung im Regulierraum einsetzbar ist und der als Einlass ausgebildete Anschluss mit Druck beaufschlagbar ist und das Kältemittel in den einen Kanal oder den anderen Kanal oder anteilig in die beiden Kanäle übergeführt wird und diese Drehschieberanordnung der ersten Mehrwegeventilanordnung durch einen drehbaren Drehschieber und eine feststehende Drehschieberauflage ausgebildet ist, welche vorzugsweise unter Druck am Boden des Regulierraums anliegend positioniert ist.

Die zweite Mehrwegeventilanordnung ist hinsichtlich der Drehschieberanordnung bevorzugt abweichend zur Drehschieberanordnung der ersten Mehrwegeventilanordnung aufgebaut. Diese weist für eine Anpassung an Druckgefälle und eine Strömungsrichtung auf, da zunächst die Drehschieberauflage beaufschlagt wird. Bei dieser zweiten Mehrwegeventilanordnung wirkt der Druck in entgegengesetzter Richtung zur ersten Mehrwegeventilanordnung.

Bei der zweiten Mehrwegeventilanordnung weist bevorzugt die Drehschieberauflage zwei Anschlussbuchsen auf, die in Abschnitte der Kanäle einsetzbar und jeweils durch Dichtungen abgedichtet sind. Vorzugsweise sind die zu den Kanälen weisenden Stirnflächen der Anschlussbuchsen mit Einführschrägen versehen. Dadurch kann eine Strömungsoptimierung einerseits und Verringerung einer Flächenpressung durch den Druck des Kältemittels auf die Stirnseiten der Anschlussbuchsen andererseits erzielt werden.

Vorteilhafterweise kann durch die vorbeschriebene Ausführungsform des Mehrwegeventils eine Ansteuerung von bis zu sechs verschiedenen Schaltpositionen und vorzugsweise eine Schaltstellung für einen Servicebetrieb des Kältemittelkreislaufes ansteuerbar sein. Dabei sind sechs Schaltpositionen dahingehend zu verstehen, dass die Anschlüsse voneinander abweichend miteinander verbunden sind, wobei dazwischenliegend noch bezüglich der einzelnen Strömungsvolumen Einstellungen möglich sind.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht eines Mehrwegeventils,
Figur 2 eine schematische Seitenansicht des Mehrwegeventils gemäß Figur 1,
Figur 3 ein schematischer Längsschnitt des Mehrwegeventils gemäß Figur 1,
Figur 4 eine schematisch vergrößerte Ansicht einer ersten Mehrwegeventilanordnung des Mehrwegeventils,
Figur 5 eine schematisch vergrößerte Schnittansicht einer zweiten Mehrwegeventilanordnung des Mehrwegeventils,
Figur 6 eine schematische Anordnung eines Kältemittelkreislaufes mit einer Darstellung einer ersten Schaltposition des Mehrwegeventils gemäß Figur 1,
Figur 7a - 7c eine schematische Ansicht der Schaltposition des Mehrwegeventils sowie Ansichten auf die Drehschieberanordnungen der Mehrwegeventilanordnungen in der Schaltposition des Mehrwegeventils gemäß Figur 6,
Figur 8a - 8c eine schematische Ansicht einer Schaltposition des Mehrwegeventils sowie die Ansichten auf die Drehschieberanordnungen der Mehrwegeventilanordnungen in Strömungsrichtung des Kältemittels,
Figur 9a - 9c eine schematische Ansicht einer Schaltposition des Mehrwegeventils sowie die Ansichten auf die Drehschieberanordnungen in Strömungsrichtung des Kältemittels,
Figur 10a - 10c eine schematische Ansicht einer Schaltposition des Mehrwegeventils sowie die Ansichten auf die Drehschieberanordnungen in Strömungsrichtung des Kältemittels,
Figur 11a - 11c eine schematische Ansicht einer Schaltposition des Mehrwegeventils sowie die Ansichten auf die Drehschieberanordnungen in Strömungsrichtung des Kältemittels,
Figur 12a - 12c eine schematische Ansicht einer Schaltposition des Mehrwegeventils sowie die Ansichten auf die Drehschieberanordnungen in Strömungsrichtung des Kältemittels,
Figur 13 eine schematische Anordnung des Kältemittelkreislaufs mit einer weiteren Schaltposition des Mehrwegeventils, und
Figur 14a - 14c eine schematische Ansicht einer Schaltposition des Mehrwegeventils sowie die Ansichten auf die Drehschieberanordnungen in Strömungsrichtung des Kältemittels.

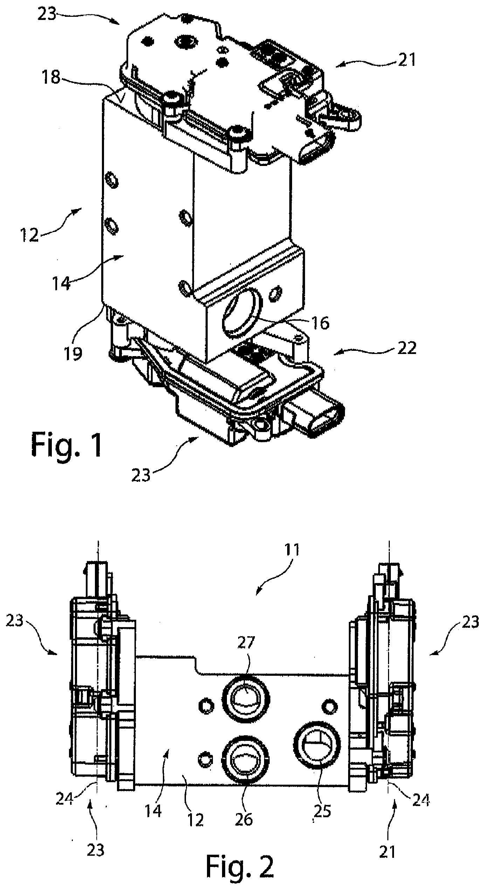

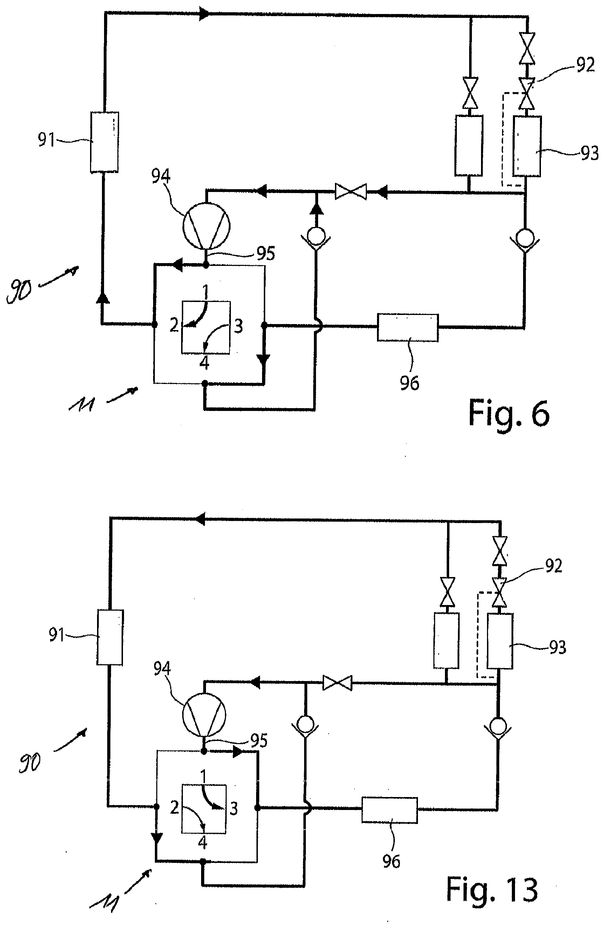

In Figur 1 ist eine perspektivische Ansicht eines Mehrwegeventils 11 dargestellt. Dieses Mehrwegeventil 11 dient zur Steuerung eines Kältemittelkreislaufes 12 (Figuren 6 und 13) einer Kälteanlage mit Wärmepumpenfunktion.

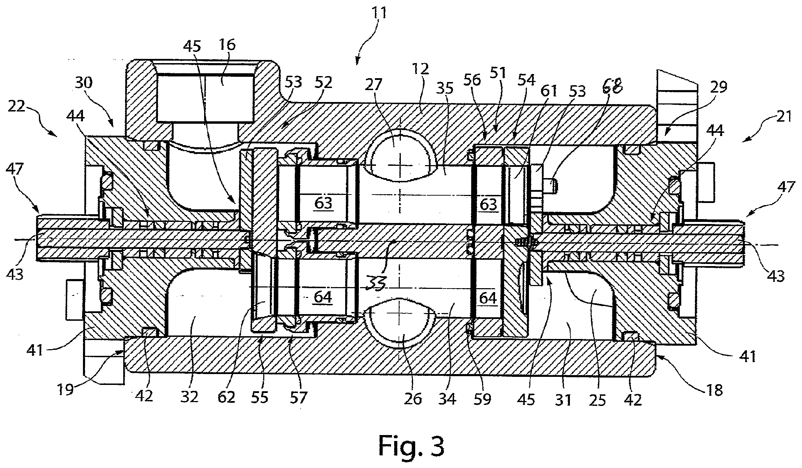

Dieses Mehrwegeventil 11 umfasst ein Gehäuse 12, welches beispielsweise einen rechteckförmigen Querschnitt aufweist. Dieses Gehäuse 12 weist auf einer Stirnseite eine Montageschnittstelle 14 auf, in welcher beispielsweise Bohrungen zum Anbringen von Befestigungselementen vorgesehen sind. An einer weiteren Seitenfläche ist ein Anschluss 16 für eine Kältemittelzufuhr oder -abfuhr vorgesehen. An einer Stirnseite 18 und einer gegenüberliegenden Stirnseite 19 des Gehäuses 12 ist eine erste Mehrwegeventilanordnung 21 und gegenüberliegend eine zweite Mehrwegeventilanordnung 22 angeordnet. An diesen Mehrwegeventilanordnung 21, 22 ist jeweils nur ein Antrieb 23 zu sehen. Nachfolgend werden in den Schnittansichten gemäß den Figuren 3 bis 5 die Mehrwegeventilanordnungen 21, 22 näher beschrieben:
In einer Seitenansicht des Mehrwegeventils 11 gemäß Figur 2 sind in einer weiteren Seitenfläche des Gehäuses 12 beispielsweise drei weitere Anschlüsse 25, 26, 27 vorgesehen. Diese Anschlüsse 25, 26, 27 sind an einer Seitenfläche vorgesehen, welche vorzugsweise parallel zu einer Längsachse 24 der Antriebe 23 ausgerichtet ist.

Gemäß einer weiteren bevorzugten Ausführungsform des Mehrwegeventils 11 kann vorgesehen sein, dass alle Anschlüsse 16, 25, 26, 27 an einer Seitenfläche des Gehäuses 12 angeordnet sind. Auch kann alternativ an jeder Seitenfläche des Gehäuses ein Anschluss 16, 25, 26, 27 vorgesehen sein. Die Anzahl der Anschlüsse je Seitenfläche 12 des Gehäuses und deren Ausrichtung kann an die Einbausituation angepasst sein.

In Figur 3 ist ein Längsschnitt des Mehrwegeventils 11 gemäß Figur 1 dargestellt. Die jeweiligen Antriebe 23 der ersten Mehrwegeventilanordnung 21 und zweiten Mehrwegeventilanordnung 22 sind nur teilweise dargestellt.

Dieser Längsschnitt zeigt, dass das Gehäuse 12 für das Mehrwegeventil 11 vorzugsweise einteilig ausgebildet ist. An den Stirnseiten 18, 19 ist jeweils eine Einstecköffnung 29, 30 vorgesehen, an die sich jeweils ein Regulierraum 31, 32 anschließt. Dem Regulierraum 31 ist der erste Anschluss 25 zugeordnet. Zwischen den beiden Regulierräumen 31, 32 sind zwei Kanäle 34, 35 vorgesehen, wobei der eine Kanal 34 mit dem Anschluss 26 und der weitere Kanal 35 mit dem Anschluss 27 verbunden ist. Der zweite Regulierraum 32, der dem ersten Regulierraum 31 gegenüberliegt, ist mit dem Anschluss 16 verbunden.

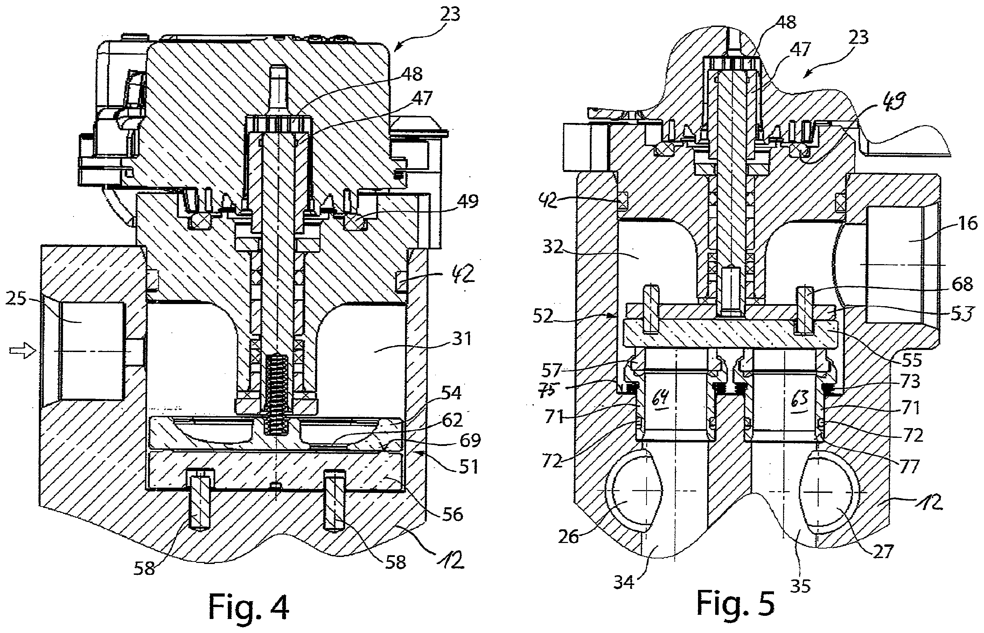

Dieses Mehrwegeventil 11 nimmt im Gehäuse 12 einander gegenüberliegend die erste Mehrwegeventilanordnung 21 und die zweite Mehrwegeventilanordnung 22 auf. Diese sind jeweils über die Einstecköffnungen 29, 30 in den entsprechenden Regulierraum 31, 32 einsteckbar und über nicht näher dargestellte lösbare Befestigungsmittel darin fixiert. Die Mehrwegeventilanordnungen 21, 22 weisen einen analogen Aufbau auf. Diese umfassen einen Grundkörper 41, der in die Einstecköffnung 29, 30 einsetzbar ist. Am Außenumfang des Grundkörpers ist zumindest eine Dichtung 42 vorgesehen, um diesen Regulierraum 31, 32 nach außen abzudichten. Im Grundkörper 41 ist eine Welle 43 durch eine Wellenlagerung 45 rotierend geführt. Zusätzlich ist eine Abdichtung gegenüber dem Regulierraum durch eine Wellendichtung 44 vorgesehen, welche zwischen der Welle 43 und dem Grundkörper 41 angeordnet ist. An einem stirnseitigen Ende der Welle 43 ist ein Zahnritzel 47 vorgesehen, welches mit einem komplementären Antriebselement 48 des Antriebs 23 antriebsverbunden ist (Figur 4 und Figur 5).

Zwischen dem Grundkörper 41 und dem Antrieb 23 beziehungsweise dessen Gehäuse kann zusätzlich zumindest eine Dichtung 49 (Figur 4 und Figur 5) vorgesehen sein.

Dem Antrieb 23 gegenüberliegend ist die Welle 43 mit einer Drehschieberanordnung 51, 52 verbunden. Die Drehschieberanordnung 51 der ersten Mehrwegeventilanordnung 21 weicht bevorzugt von der Drehschieberanordnung 52 der zweiten Mehrwegeventilanordnung 22 ab und wird nachfolgend in den Figuren 4 und 5 noch näher beschrieben.

Zwischen der Drehschieberanordnung 51, 52 und der Welle 44 ist ein Mitnehmer 53 vorgesehen, der fest mit der Welle 43 verbunden ist und eine Drehbewegung eines Drehschiebers 54, 55 gegenüber einer Drehschieberauflage 56, 57 der Drehschieberanordnung 52, 53 ansteuert. Die Welle 43 ist mit dem Mitnehmer 54 beispielsweise verschweißt, insbesondere mit Laser verschweißt, oder verlötet, verpresst oder vernietet.

Der Anschluss 25 ist als ein Einlass für ein Kältemittel ausgebildet. Somit liegt in diesem ersten Regulierraum 31 Hochdruck an. Die erste Mehrwegeventilanordnung 21 ist hochdruckseitig im Regulierraum 31 vorgesehen und entsprechend ausgebildet.

Die Anschlüsse 26, 27 sind niederdruckseitig vorgesehen. Des Weiteren ist die zweite Mehrwegeventilanordnung 22 im zweiten Regulierraum 32 niederdruckseitig angeordnet. Der Anschluss 16 ist als ein Auslass ausgebildet. Die Anschlüsse 26, 27, die zu den Kanälen 34, 35 münden, können sowohl als Einlass als auch als Auslass angesteuert werden, wobei unabhängig der Ansteuerung diese niederdruckseitig beaufschlagt sind.

Der Einlass 25 vom Gehäuse 12 in den Regulierraum 31 sowie der Anschluss 16 vom zweiten Regulierraum 32 aus dem Gehäuse 12 heraus sind bevorzugt außermittig zur Längsachse der jeweiligen Mehrwegeventilanordnung 21, 22 vorgesehen. Diese münden außermittig in die Regulierräume 31, 32 und führen das Kältemittel einem gerundeten Abschnitt des Grundkörpers 41 zu. Dadurch wird eine strömungsoptimierte Zuführung und/oder Abführung des Kältemittels ermöglicht. Des Weiteren weist die Eintrittskante des Anschlusses 25 in den Regulierraum 31 sowie eine Kante zwischen dem Regulierraum 32 und dem Auslass 16 eine innere Fase auf, wodurch eine Reduzierung des Druckabfalls zwischen dem Anschluss 25 zum Regulierraum 31 und/oder vom Regulierraum 32 zum Anschluss 16 ermöglicht ist. Auch die Anschlüsse 26, 27 sind außermittig zu den Kanälen 34, 35 positioniert.

Die Regulierräume 31, 32 sind einander gegenüberliegend und derart zueinander ausgerichtet, dass nach dem Einsetzen der ersten und zweiten Mehrwegeventilanordnung 21, 22 die Längsachsen der Wellen 43 vorzugsweise in einer gemeinsamen Längsachse liegen. Die Kanäle 34, 35 sind koaxial zur Längsachse des Gehäuses 12 beziehungsweise der Längsachse der Wellen 43 ausgerichtet. Alternativ kann vorgesehen sein, dass die Längsachsen der Wellen 43 auch parallel versetzt zueinander in einem gemeinsamen Gehäuse 12 ausgerichtet sein können. Auch ist möglich, dass die Längsachsen der beiden Wellen 43 der Mehrwegeventilanordnung 21, 22 in einem Winkel < 180° in einem gemeinsamen Gehäuse 12 angeordnet sind. In Abhängigkeit von Einbauanordnung kann auch eine Ausrichtung der Regulierräume 31, 32 in einem Winkel von 90° oder einem Winkel von 90° bis 180° vorgesehen sein, wobei die Kanäle 34, 35 entsprechend strömungsgünstige Geometrien aufweisen.

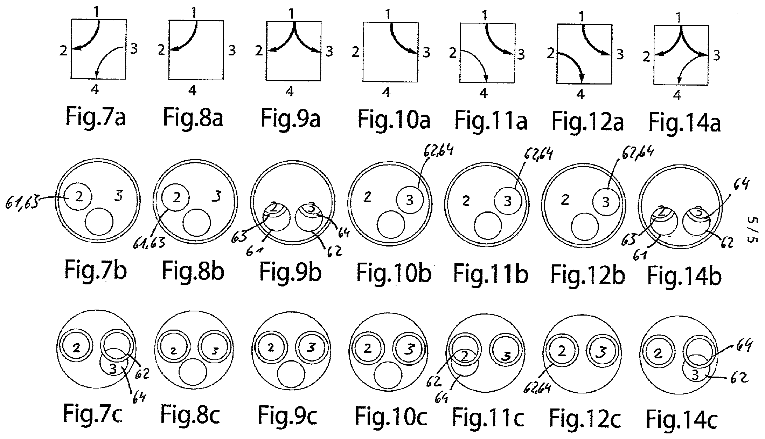

Die Drehschieberanordnungen 51, 52 weisen jeweils einen ersten drehbaren Drehschieber 54,55 auf, welche beispielsweise zwei Durchgangsöffnungen 61, 62 umfassen. Diesen Drehschiebern 54, 55 sind Drehschieberauflagen 56, 57 zugeordnet. Auch diese weisen bevorzugt jeweils zwei Durchgangsöffnungen 63, 64 auf. Durch eine entsprechende Überdeckung oder einen Versatz des ersten Drehschiebers 54, 55 zur Drehschieberauflage 56, 57 können die entsprechenden Durchgangsöffnungen gesperrt und vollständig freigegeben sowie einzeln oder beide teilweise geöffnet werden. Dies ist in den nachfolgenden Figuren 7 bis 12 und 14 beschrieben. Die jeweiligen Durchgangsöffnungen 63, 64 in der Drehschieberauflage 56, 57 sind fluchtend zu den Kanälen 34, 35 ausgerichtet.

Der Drehschieber 54, 55 und die Drehschieberauflage 56, 57 sind bevorzugt aus Keramik ausgebildet. Auch können diese aus Kunststoff oder Metall ausgebildet sein.

Durch diese Ausgestaltung des Mehrwegeventils 11 wird beispielsweise durch die erste Mehrwegeventilanordnung 21 das über den als Einlass ausgebildeten Anschluss 25 eintretende Kältemittel entweder nur dem Kanal 34 oder nur dem Kanal 35 zugeführt oder beide Kanäle 34, 35 werden jeweils anteilig mit Kältemittel versorgt. In Abhängigkeit der Schaltposition der zweiten Drehschieberanordnung 52 der zweiten Mehrwegeventilanordnung 21 kann beispielsweise ein in dem Kanal 34 anliegendes Kältemittel über den als Auslass ausgebildeten Anschluss 26 abströmen. Analoges gilt für das im Kanal 35 bereitgestellte Kältemittel, welches über den Anschluss 27 abgeführt werden kann. Auch kann eine Schaltstellung eingenommen werden, sodass der als Auslass ausgebildete Anschluss 16 das Kältemittel abführt.

In Figur 4 ist schematisch vergrößert die erste Mehrwegeventilanordnung 21 in einer weiteren Schnittansicht zu Figur 3 dargestellt. Die in Figur 4 dargestellte Schnittansicht ist um 90° gedreht zu der in Figur 3. Aus dieser Schnittansicht geht hervor, dass diese Drehschieberauflage 56 durch Stifte 58 drehgesichert zum Gehäuse 12 gelagert ist. Alternativ kann auch vorgesehen sein, dass die Drehschieberauflage 56 durch eine Verschraubung zum Gehäuse 12 fixiert gehalten wird. Zur abdichtenden Anordnung der Drehschieberauflage 56 zum Gehäuse 12 kann eine Dichtung 59 vorgesehen sein, wie dies in Figur 3 dargestellt ist, so dass für jede Durchgangsöffnung 63, 64 jeweils eine Dichtung 59 zur abdichtenden Anordnung zwischen dem Gehäuse 12 und der Drehschieberauflage 56 vorgesehen ist.

Der Drehschieber 54 weist, ausgehend von einer Oberseite in Richtung auf die Drehschieberauflage 56 gesehen, tassenförmige Vertiefungen auf, die in die Durchgangsöffnungen 61, 62 übergehen. Dadurch kann eine strömungsgünstige Anordnung geschaffen sein.

Der Mitnehmer 53 ist bevorzugt durch zumindest einen, insbesondere zwei Stifte 68 (Figur 3) drehfest zum drehbaren Drehschieber 54 fixiert. Bevorzugt ist zwischen dem drehbaren Drehschieber 54 und der Drehschieberauflage 56 eine Gleitfläche 69 vorgesehen, welche gegenüber einer Stirnseite der Drehschieberauflage 56 erhöht ist. Dadurch kann eine erleichterte Drehbewegung des Drehschiebers 54 zur Drehschieberauflage 56 erfolgen. Gleichzeitig kann durch diese erhöhte Gleitfläche 59 eine Dichtfläche gebildet sein, welche sich um die Durchgangsbohrung 63, 64 erstreckt. Ergänzend können einzelne segmentförmige Gleitflächen 69 als Abstützflächen ausgebildet sein.

In Figur 5 ist eine schematisch vergrößerte Schnittansicht der zweiten Mehrwegeventilanordnung 22 dargestellt. Diese Schnittansicht ist ebenfalls um 90° gegenüber der Schnittansicht in Figur 3 gedreht. Durch diese Schnittansicht wird offensichtlich, dass der Mitnehmer 53 über Stifte 68 an dem drehbaren Drehschieber 55 angreift und drehverbunden ist. Beispielsweise kann der Stift 68, insbesondere Passstift, in den Mitnehmer 53 eingepresst sein und in eine Vertiefung in den drehbaren Drehschieber 55 eingreifen. Dabei ist bevorzugt eine Presspassung zwischen Stift 68 und des Drehschiebers 55 vorgesehen. Bevorzugt sind die Stifte 68 mit einer Kunststoffhülse in Bohrungen des Drehschiebers 55 zur querkraftfreien Drehmomentübertragung eingepresst. Diese Verbindung zwischen dem Mitnehmer 18 und dem Drehschieber 55 kann auch bei der Drehschieberanordnung 51 gemäß Figur 4 vorgesehen sein.

Die im zweiten Regulierraum 32 angeordnete Drehschieberanordnung 52 ist aufgrund der herrschenden Druckverhältnisse abweichend zu der Drehschieberanordnung 51 ausgebildet. Im Regulierraum 32 liegt Niederdruck an. In den Kanälen 34, 35 liegt das Kältemittel noch mit Hochdruck an. Um eine abdichtende Anordnung zwischen der Drehschieber-auflage 57 der zweiten Drehschieberanordnung 52 und dem Regulierraum 32 zu ermöglichen, ist vorgesehen, dass in den Kanal 34 und 35 jeweils eine Einsteckbuchse 71 eingesetzt ist. Diese ist mittels einer Dichtung 72 zur Außenseite des Kanals 34, 35 abgedichtet. Diese Einsteckbuchse 71 ist in axialer Richtung zur Längsachse der Kanäle 34, 35 verschiebbar positioniert. Vorzugsweise ist ein Federelement 73 zwischen einer Schulter 74 der Einsteckbuchse 71 und einem Boden 75 des Regulierraumes 32 positioniert. Dadurch wird die Einsteckbuchse 71 in Richtung auf die Drehschieberanordnung 52 gedrückt. Eingangsseitig in Strömungsrichtung gesehen kann die Einsteckbuchse 71 eine Schräge 77 aufweisen um eine strömungsgünstige Anordnung zu bilden. Gegenüberliegend kann die Einsteckbuchse 71 eine Anlagefläche oder eine Aufnahme aufweisen, um an der Drehschieberauflage 57 anzulegen und/oder anzugreifen. Die Drehschieberauflage 57 kann durch zwei Ringkörper ausgebildet sein, die an der Einsteckbuchse 71 aufgenommen und gehalten werden. Diese können wiederum mit einer Gleitfläche 69 an dem drehbaren Drehschieber 55 anliegen.

In Figur 6 ist ein beispielhafter Aufbau des Kältemittelkreislaufes 90 dargestellt. Dieser Kältemittelkreislauf 90 wird im Kühlmodus betrieben. Dieser Kältemittelkreislauf 90 umfasst in Strömungsrichtung beschrieben einen Kondensator 91, der das unter Hochdruck stehende Kältemittel einem Expansionsventil 92 zuführt. Niederdruckseitig zum Expansionsventil 92 ist ein Verdampfer 93 vorgesehen, der das entspannte Kältemittel einem Verdichter 94 zuführt. Ausgangsseitig des Verdichters 94 ist eine Fluidleitung 95 vorgesehen, die unmittelbar zum Anschluss 25 des Gehäuses 12 des Mehrwegeventils 11 führt. Durch die in Figur 3 dargestellte Schaltposition der ersten Mehrwegeventilanordnung 21 strömt das Kältemittel in den Kanal 35 und darauffolgend zum Anschluss 27, so dass das Kältemittel dem Kondensator 91 zugeführt wird. Aufgrund der Schaltposition der zweiten Mehrwegeventilanordnung 22 kann ein sich im Inneren des Kondensators 96 angesammeltes Kältemittel abgesaugt werden, so dass dieses über den Anschluss 26 dem Kanal 34 zugeführt wird und von dort aus über die zweite Drehschieberanordnung 52 zum Regulierraum 32 übergeführt wird, so dass dieses über den Anschluss 16 wiederum dem Kältemittelkreislauf 90 zugeführt wird.

In Figur 7a ist eine schematische Darstellung dieser Schaltposition gemäß Figur 6 gezeigt. In Figur 7b ist eine Ansicht auf die erste Drehschieberanordnung 51 in Strömungsrichtung gesehen dargestellt. Daraus ist offensichtlich, dass die Durchgangsöffnungen 61 und 63 einen gemeinsamen Durchgang bilden, wohingegen die zweiten Durchgangsöffnungen 62 und 64 nicht deckungsgleich übereinanderliegen und diesen Durchgang sperren. In Figur 7c ist eine Ansicht auf die zweite Drehschieberanordnung 52 in Strömungsrichtung gesehen dargestellt. Die Durchgangsöffnung 62 des drehbaren Drehschiebers 55 gibt nur teilweise die Durchgangsöffnung 64 der Drehschieberauflage 57 frei, wodurch ein verringerter Kältemittelstrom zum Anschluss 16 gelangt. Die weiteren Durchgangsöffnungen 61, 63 sind gesperrt.

In Figur 8a ist eine weitere Schaltstellung des Mehrwegeventils 11 dargestellt. Diese Schaltstellung kann einen reinen Kühlmodus ansteuern. Dabei ist gemäß Figur 8b vorgesehen, dass die erste Drehschieberanordnung 51 einen Durchgang zum Anschluss 27 frei gibt und den weiteren Durchgang zum Anschluss 26 sperrt. In Figur 8c ist die Schaltposition der zweiten Drehschieberanordnung 52 dargestellt, welche einen Durchgang der Kanäle 34 und 35 in den Regulierraum 32 sperrt.

In Figur 9a ist eine weitere Schaltposition des Mehrwegeventils 11 dargestellt. Hierbei kann es sich um einen Übergang von einem Kühlmodus in einen Wärmepumpenmodus handeln. In Figur 9b ist dabei die Schaltstellung der ersten Drehschieberanordnung 51 dargestellt. Die beiden Durchgangsöffnungen 61, 62 des drehbaren Drehschiebers 54 überdecken nur teilweise die Durchgangsbohrungen 63, 64 der Drehschieberauflage 56, so dass aus dem Regulierraum 31 Kältemittel in die Kanäle 34, 35 strömt. Da gemäß der in Figur 9c dargestellten Schaltposition der zweiten Drehschieberanordnung 52 ein Durchfluss in den weiteren Regulierraum 32 gesperrt ist, strömt das in die Kanäle 34, 35 einmündende Kältemittel vollständig in die Anschlüsse 26, 27 ab.

Die Figur 10a zeigt eine weitere mögliche Schaltposition des Mehrwegeventils 11. Die erste Drehschieberanordnung 51 gemäß Figur 10b ist derart angesteuert, dass die Durchgänge 62, 64 geöffnet sind und das Kältemittel in den Kanal 34 zum Anschluss 26 übergeführt wird. Der Durchgang zum Anschluss 27 ist gesperrt. In Figur 10c ist die zweite Drehschieberanordnung 52 in einer gesperrten Position vorgesehen.

Die Figur 11a zeigt eine weitere mögliche Schaltposition des Mehrwegeventils 11. Hier kann es sich um einen Wärmepumpenmodus handeln, insbesondere einer Heizung mit gleichzeitiger Absaugung des Kühlkreislaufes. Dabei ist die erste Drehschieberanordnung 51 gemäß Figur 11b entsprechend der Figur 10b angeordnet. Für die gleichzeitige Absaugung des Kühlkreislaufs ist die zweite Drehschieberanordnung 52 in eine Schaltposition gemäß Figur 11c übergeführt, bei der die Durchgangsöffnung 61, 63 nur teilweise geöffnet ist.

Die Figur 12a zeigt abweichend zur Figur 11a, dass eine Durchflussmenge des Kältemittels von dem Anschluss 26 zum Anschluss 16 erhöht ist. Dies zeigt ein Vergleich der Figuren 11c und 12c, aus denen hervorgeht, dass die Durchgangsöffnungen 61, 63 der zweiten Drehschieberanordnung 52 deckungsgleich sind und somit eine maximale Öffnung freigegeben ist.

Diese in den Figuren 12 dargestellte Schaltposition des Mehrwegeventils 11 steuert den Kältemittelkreislauf 90 gemäß Figur 13 in dem Heizmodus, wie dies aus den Strömungspfeilen ersichtlich ist.

In Figur 14a ist eine weitere mögliche Schaltposition des Mehrwegeventils 11 dargestellt. Bei dieser Schaltstellung handelt es sich um eine sogenannte Servicestellung, in welcher beispielsweise ein Evakuieren des Kältemittelkreislaufes 90 und ein anschließendes Befüllen mit Kältemittel ermöglicht ist. Bei dieser Schaltstellung ist vorgesehen, dass die erste Drehschieberanordnung 51 bezüglich den Durchgangsöffnungen 61, 63 sowie 62, 64 teilweise geöffnet ist, so dass die Kanäle 34, 35 befüllt werden und das Kältemittel über die Anschlüsse 26, 27 abfließen kann. Darüber hinaus ist die zweite Mehrwegeventilanordnung 52 teilweise geöffnet, so dass Kältemittel in den zweiten Regulierraum 32 strömen kann, welches über den Anschluss 16 abfließt.

Weitere Schaltpositionen zu den vorbeschriebenen Schaltpositionen sind ebenfalls möglich. Durch solche Zwischenpositionen können einzelne Volumenströme betragsmäßig geändert und geregelt werden.

## Patentansprüche

1. Mehrwegeventil zur Steuerung eines Kältemittelkreislaufes einer Kälteanlage mit einer Wärmepumpenfunktion,
- mit einem Gehäuse (12), welches zwei einander gegenüberliegende oder zwei einander zugeordnete Stirnseiten (18, 19) aufweist wobei die erste Stirnseite (18) eine Einstecköffnung (29) umfasst, an die sich ein erster Regulierraum (31) anschließt und die zweite Stirnseite (19) eine Einstecköffnung (30) umfasst, an die sich ein zweiter Regulierraum (32) anschließt,
- mit einer ersten Mehrwegeventilanordnung (21), die in den ersten Regulierraum (31) einsetzbar ist und mit einer zweiten Mehrwegeventilanordnung (22), die in den zweiten Regulierraum (32) einsetzbar ist, wobei die Mehrwegeventilanordnungen (21, 22) jeweils zumindest einen Grundkörper (41) und eine Drehschieberanordnung (51, 52) umfassen,
- mit jeweils einem Anschluss (25, 16) in dem Gehäuse (12), der in den jeweiligen Regulierraum (31, 32) mündet, und
- mit zumindest weiteren Anschlüssen (26, 27) in dem Gehäuse (12), **dadurch gekennzeichnet, dass** einer (26) der zumindest weiteren Anschlüsse (26, 27) mit einem ersten Kanal (34) verbunden ist, und einer (27) der zumindest weiteren Anschlüsse (26, 27) mit einem zweiten Kanal (35) verbunden ist, wobei die Kanäle (34, 35) sich zwischen den in den Regulierräumen (31, 32) angeordneten Drehschieberanordnungen (51, 52) erstrecken und wobei die Kanäle (34, 35) die Regulierräume (31, 32) verbinden.

2. Mehrwegeventil nach Anspruch 1, **dadurch gekennzeichnet, dass** das Gehäuse (12) zwei Regulierräume (31, 32) aufweist, die in einem Winkel zwischen 90° und 179° zueinander ausgerichtet sind oder die zu einer Längsachse des Gehäuses (12) ausgerichtet sind.

3. Mehrwegeventil nach Anspruch 1 oder 2, **dadurch gekennzeichnet, dass** die Einstecköffnungen (29, 30) im Gehäuse (12) jeweils durch den Grundkörper (41) jeder Mehrwegeventilanordnung (21, 22) geschlossen sind.

4. Mehrwegeventil nach einem der vorhergehenden Ansprüche, **dadurch gekennzeichnet, dass** die Drehschieberanordnungen (51, 52) mit jeweils einer Welle (43) angetrieben sind und die Wellen (43) der zueinander im Gehäuse (12) angeordneten Mehrwegeventilanordnungen (21, 22) in einer gemeinsamen Längsachse (33) liegen.

5. Mehrwegeventil nach einem der vorhergehenden Ansprüche, **dadurch gekennzeichnet, dass** die Regulierräume (31, 32) einander gegenüberliegen und die Kanäle (34, 35) koaxial zur Längsachse (33) des Gehäuses (12) angeordnet sind.

6. Mehrwegeventil nach einem der vorhergehenden Ansprüche, **dadurch gekennzeichnet, dass** der zumindest eine in den Regulierraum (31, 32) mündende Anschluss (16, 25) tangential zum Regulierraum (31, 32) ausgerichtet ist und/oder dass der zumindest eine in den Regulierraum (31, 32) mündende Anschluss (16, 25) und der zumindest eine zwischen den beiden Drehschieberanordnungen (51, 52) der Mehrwegeventilanordnungen (21, 22) vorgesehene Anschluss (26, 27) in derselben Richtung am Gehäuse (12) ausgerichtet sind.

7. Mehrwegeventil nach einem der vorhergehenden Ansprüche, **dadurch gekennzeichnet, dass** das Gehäuse (12) zumindest abschnittsweise einen rechteckförmigen Querschnitt aufweist und der zumindest eine in den Regulierraum (31) liegende Anschluss (25) und die in die Kanäle (34, 35) mündenden Anschlüsse (26, 27) zur selben Seitenfläche des Gehäuses (12) ausgerichtet sind und vorzugsweise der zumindest eine weitere Anschluss (16) des weiteren Regulierraumes (32) zu einer benachbarten oder gegenüberliegenden Seitenfläche des Gehäuses (12) ausgerichtet ist.

8. Mehrwegeventil nach einem der vorhergehenden Ansprüche, **dadurch gekennzeichnet, dass** jede Mehrwegeventilanordnung (21, 22) einen Antrieb (23) aufweist, der eine mit der Drehschieberanordnung (51, 52) verbundene Welle (34) antreibt und vorzugsweise der Antrieb (23) der Mehrwegeventilanordnungen (21, 22) ein flach rechteckförmiges Gehäuse aufweist und eine Längsachse (24) der Gehäuse der Antriebe (23) abweichend zur Seitenfläche des Gehäuses (12) ausgerichtet ist, in welcher die Mehrzahl der Anschlüsse (25, 26, 27) vorgesehen ist.

9. Mehrwegeventilanordnung nach einem der vorhergehenden Ansprüche, **dadurch gekennzeichnet, dass** die erste und zweite Mehrwegeventilanordnung (21, 22) mit einer gemeinsamen Steuerung antreibbar sind.

10. Mehrwegeventil nach einem der vorhergehenden Ansprüche, **dadurch gekennzeichnet, dass** eine Stirnseitenfläche des Gehäuses (12) frei von Anschlüssen (16, 25, 26, 27) ist und eine Montageschnittstelle bildet.

11. Mehrwegeventil nach einem der vorhergehenden Ansprüche, **dadurch gekennzeichnet, dass** der eine zum Regulierraum (31) führende Anschluss (25) bei allen Schaltstellungen der Drehschieberanordnungen (51, 52) als Einlass für das Kältemittel und die erste Mehrwegeventilanordnung (21) auf der Hochdruckseite des Gehäuses (12) angeordnet ist und vorzugsweise die der ersten Mehrwegeventilanordnung (21) gegenüberliegende zweite Mehrwegeventilanordnung auf einer Niederdruckseite des Gehäuses (12) angeordnet ist.

12. Mehrwegeventil nach einem der vorhergehenden Ansprüche, **dadurch gekennzeichnet, dass** die erste und zweite Mehrwegeventilanordnung (21, 22) denselben Grundkörper (41) und Anschlussschnittstelle für den Antrieb (23), vorzugsweise denselben Antrieb (23), aufweisen.

13. Mehrwegeventil nach einem der vorhergehenden Ansprüche, **dadurch gekennzeichnet, dass** die erste und zweite Mehrwegeventilanordnung (21, 22) zwischen dem Grundkörper (41) und der Drehschieberanordnung (51, 52) einen Mitnehmer (53) aufweisen, der durch die Welle (43) drehbar angesteuert ist und jeweils einen Drehschieber (54, 55) der Drehschieberanordnungen (51, 52) drehbar ansteuert.

14. Mehrwegeventil nach einem der vorhergehenden Ansprüche, **dadurch gekennzeichnet, dass** die erste Mehrwegeventilanordnung (21) in den Regulierraum (31) einsetzbar ist und der als Einlass ausgebildete Anschluss (25) mit Druck beaufschlagbar ist und das Kältemittel in den einen oder in beide Kanäle (34, 35) übergeführt wird und die Drehschieberanordnung (51) der ersten Mehrwegeventilanordnung (21) durch den ersten drehbaren Drehschieber (54) und eine zweite Drehschieberauflage (56) ausgebildet ist, welche vorzugsweise unter Druck des Kältemittels am Boden des Regulierraumes (31) anliegend gehalten ist.

15. Mehrwegeventil nach einem der vorhergehenden Ansprüche, **dadurch gekennzeichnet, dass** die Drehschieberanordnung (52) der zweiten Mehrwegeventilanordnung (22) für eine Strömungsrichtung des Kältemittels von den zwei Kanälen (34, 35) zum Regulierraum (32) ausgebildet ist und zuerst auf die zweite Drehschieberauflage (57) wirkt und vorzugsweise die zweite Drehschieberauflage (57) der Drehschieberanordnung (52) der zweiten Mehrwegeventilanordnung (22) zwei Anschlussbuchsen aufweist, die in die Kanäle (34, 35) zumindest teilweise einsetzbar sind und vorzugsweise in den Kanälen (34, 35) längsverschieblich geführt sind und jeweils durch Dichtungen zu den Kanälen (34, 35) abgedichtet sind und vorzugsweise die zu den Kanälen (34, 35) weisenden Stirnseiten der Anschlussbuchsen Einführschrägen (77) aufweisen.

## Claims

1. Multi-port valve for controlling a refrigerant circuit of a refrigeration system with a heat pump function,
- having a housing (12) which has two mutually opposite or two mutually associated end faces (18, 19), the first end face (18) comprising an insertion opening (29) which is adjoined by a first regulating chamber (31) and the second end face (19) comprising an insertion opening (30) which is adjoined by a second regulating chamber (32),
- with a first multi-port valve arrangement (21) which can be inserted into the first regulating chamber (31) and with a second multi-port valve arrangement (22) which can be inserted into the second regulating chamber (32), the multi-port valve arrangements (21, 22) each comprising at least one base body (41) and a rotary slide valve arrangement (51, 52),
- each having a connection (25, 16) in the housing (12) which opens into the respective regulating chamber (31, 32), and
- with at least further connections (26, 27) in the housing (12),
**characterized in**
**that** one (26) of the at least further connections (26, 27) is connected to a first channel (34), and one (27) of the at least further connections (26, 27) is connected to a second channel (35), wherein the channels (34, 35) extend between the rotary slide valve arrangements (51, 52) arranged in the regulating chambers (31, 32) and wherein the channels (34, 35) connect the regulating chambers (31, 32) .

2. Multi-port valve according to claim 1, **characterized in that** the housing (12) has two regulating chambers (31, 32) which are aligned at an angle of between 90° and 179° to one another or which are aligned with a longitudinal axis of the housing (12).

3. A multi-port valve according to claim 1 or 2, **characterized in that** the insertion openings (29, 30) in the housing (12) are each closed by the base body (41) of each multi-port valve arrangement (21, 22).

4. Multi-way valve according to one of the preceding claims, **characterized in that** the rotary slide valve arrangements (51, 52) are each driven by a shaft (43) and the shafts (43) of the multi-way valve arrangements (21, 22) arranged relative to one another in the housing (12) lie in a common longitudinal axis (33).

5. Multiport valve according to one of the preceding claims, **characterized in that** the regulating chambers (31, 32) are arranged opposite each other and the channels (34, 35) are arranged coaxially to the longitudinal axis (33) of the housing (12).

6. Multiport valve according to one of the preceding claims, **characterized in that** the at least one connection (16, 25) opening into the regulating chamber (31, 32) is aligned tangentially to the regulating chamber (31, 32) and/or **in that** the at least one connection (16, 25) opening into the regulating chamber (31, 32) and the at least one connection (26, 27) provided between the two rotary slide valve arrangements (51, 52) of the multiport valve arrangements (21, 22) are aligned in the same direction on the housing (12).

7. Multi-port valve according to one of the preceding claims, **characterized in that** the housing (12) has a rectangular cross-section at least in sections and the at least one connection (25) located in the regulating chamber (31) and the connections (26, 27) opening into the channels (34, 35) are aligned with the same side face of the housing (12) and preferably the at least one further connection (16) of the further regulating chamber (32) is aligned with an adjacent or opposite side face of the housing (12).

8. Multiport valve according to one of the preceding claims, **characterized in that** each multiport valve arrangement (21, 22) has a drive (23) which drives a shaft (34) connected to the rotary slide valve arrangement (51, 52) and preferably the drive (23) of the multiport valve arrangements (21, 22) has a flat rectangular housing and a longitudinal axis (24) of the housing of the drives (23) is aligned deviating from the side surface of the housing (12) in which the plurality of ports (25, 26, 27) is provided.

9. Multi-port valve arrangement according to one of the preceding claims, **characterized in that** the first and second multi-port valve arrangements (21, 22) are drivable with a common control.

10. A multi-port valve according to any one of the preceding claims, **characterized in that** an end face of the housing (12) is free of connections (16, 25, 26, 27) and forms a mounting interface.

11. Multi-port valve according to one of the preceding claims, **characterized in that** the one connection (25) leading to the regulating chamber (31) is arranged as an inlet for the refrigerant and the first multi-port valve arrangement (21) on the highpressure side of the housing (12) in all switching positions of the rotary slide valve arrangements (51, 52), and preferably the second multi-port valve arrangement opposite the first multi-port valve arrangement (21) is arranged on a low-pressure side of the housing (12).

12. Multi-port valve according to one of the preceding claims, **characterized in that** the first and second multi-port valve arrangement (21, 22) have the same base body (41) and connection interface for the drive (23), preferably the same drive (23).

13. Multiport valve according to one of the preceding claims, **characterized in that** the first and second multiport valve arrangements (21, 22) have a driver (53) between the base body (41) and the rotary slide valve arrangement (51, 52), which driver is rotatably actuated by the shaft (43) and rotatably actuates in each case a rotary slide valve (54, 55) of the rotary slide valve arrangements (51, 52).

14. Multi-port valve according to one of the preceding claims, **characterized in that** the first multi-port valve arrangement (21) can be inserted into the regulating chamber (31) and the connection (25) designed as an inlet can be pressurized and the refrigerant is transferred into one or both channels (34, 35) and the rotary slide valve arrangement (51) of the first multi-port valve arrangement (21) is formed by the first rotatable rotary slide valve (54) and a second rotary slide valve support (56), which is preferably held in contact with the bottom of the regulating chamber (31) under pressure of the refrigerant.

15. Multiport valve according to one of the preceding claims, **characterized in that** the rotary slide valve arrangement (52) of the second multiport valve arrangement (22) is designed for a flow direction of the refrigerant from the two ducts (34, 35) to the regulating chamber (32) and acts first on the second rotary slide valve support (57) and preferably the second rotary slide valve support (57) of the rotary slide valve arrangement (52) of the second multiport valve arrangement (22) has two connection sockets, which can be at least partially inserted into the ducts (34, 35) and are preferably guided in the ducts (34, 35) so as to be longitudinally displaceable and are in each case sealed off from the ducts (34, 35) by seals and preferably the end faces of the connecting bushes facing the ducts (34, 35) have insertion chamfers (77).

## Revendications

1. Soupape à voies multiple pour commander un circuit de frigorigène d'une installation frigorifique avec une fonction de pompe à chaleur,
- avec un boîtier (12) qui présente deux faces frontales opposées ou deux faces frontales associées (18, 19), la première face frontale (18) comprenant une ouverture d'insertion (29) à laquelle se raccorde une première chambre de régulation (31) et la deuxième face frontale (19) comprenant une ouverture d'insertion (30) à laquelle se raccorde une deuxième chambre de régulation (32),
- avec un premier dispositif de soupape à plusieurs voies (21) pouvant être inséré dans la première chambre de régulation (31) et avec un deuxième dispositif de soupape à plusieurs voies (22) pouvant être inséré dans la deuxième chambre de régulation (32), les dispositifs de soupape à plusieurs voies (21, 22) comprenant chacun au moins un corps de base (41) et un dispositif à tiroir rotatif (51, 52),
- avec respectivement un raccord (25, 16) dans le boîtier (12) qui débouche dans l'espace de régulation respectif (31, 32), et
- avec au moins d'autres raccords (26, 27) dans le boîtier (12),
**caractérisé en ce**
**que** l'un (26) des au moins autres raccords (26, 27) est relié à un premier canal (34) et l'un (27) des au moins autres raccords (26, 27) est relié à un deuxième canal (35), les canaux (34, 35) s'étendant entre les dispositifs à tiroirs rotatifs (51, 52) disposés dans les chambres de régulation (31, 32) et les canaux (34, 35) reliant les chambres de régulation (31, 32).

2. Soupape à voies multiple selon la revendication 1, **caractérisée en ce que** le boîtier (12) comporte deux chambres de régulation (31, 32) qui sont orientées l'une par rapport à l'autre selon un angle compris entre 90° et 179° ou qui sont orientées par rapport à un axe longitudinal du boîtier (12).

3. Soupape à voies multiple selon la revendication 1 ou 2, **caractérisée en ce que** les ouvertures d'insertion (29, 30) dans le boîtier (12) sont chacune fermées par le corps de base (41) de chaque dispositif de soupape à plusieurs voies (21, 22).

4. Soupape à voies multiple selon l'une des revendications précédentes, **caractérisée en ce que** les ensembles à tiroir rotatif (51, 52) sont entraînés chacun par un arbre (43) et les arbres (43) des ensembles de soupapes à plusieurs voies (21, 22) disposés les uns par rapport aux autres dans le boîtier (12) sont situés dans un axe longitudinal commun (33).

5. Soupape à voies multiple selon l'une des revendications précédentes, **caractérisée en ce que** les chambres de régulation (31, 32) sont disposées en vis-à-vis et les canaux (34, 35) sont disposés coaxialement à l'axe longitudinal (33) du boîtier (12).

6. Soupape à voies multiple selon l'une des revendications précédentes, **caractérisée en ce que** le raccord (16, 25) débouchant dans la chambre de régulation (31, 32) est orienté tangentiellement à la chambre de régulation (31, 32) et/ou **en ce que** le raccord (16, 25) débouchant dans la chambre de régulation (31, 32) et le au moins un raccord (26, 27) prévu entre les deux dispositifs à tiroir rotatif (51, 52) des dispositifs de soupape à plusieurs voies (21, 22) sont orientés dans la même direction sur le boîtier (12).

7. Soupape à voies multiple selon l'une des revendications précédentes, **caractérisée en ce que** le boîtier (12) présente au moins par sections une section transversale rectangulaire et **en ce que** le au moins un raccord (25) situé dans la chambre de régulation (31) et les raccords (26, 27) débouchant dans les canaux (34, 35) débouchant dans les canaux (26, 27) sont alignés sur la même face latérale du boîtier (12) et, de préférence, le au moins un autre raccord (16) de l'autre chambre de régulation (32) est aligné sur une face latérale adjacente ou opposée du boîtier (12).

8. Soupape à voies multiple selon l'une des revendications précédentes, **caractérisée en ce que** chaque soupape à plusieurs voies (21, 22) comporte un entraînement (23) qui entraîne un arbre (34) relié au dispositif à tiroir rotatif (51, 52) et de préférence l'entraînement (23) des soupapes à plusieurs voies (21, 22) présente un boîtier rectangulaire plat et un axe longitudinal (24) des boîtiers des entraînements (23) est orienté de manière différente par rapport à la surface latérale du boîtier (12) dans laquelle est prévue la pluralité de raccords (25, 26, 27).

9. Dispositif de soupape à plusieurs voies selon l'une des revendications précédentes, **caractérisé en ce que** les premier et deuxième dispositifs de soupape à plusieurs voies (21, 22) peuvent être entraînés par une commande commune.

10. Soupape à voies multiple selon l'une des revendications précédentes, **caractérisée en ce qu'**une surface frontale du boîtier (12) est dépourvue de raccords (16, 25, 26, 27) et forme une interface de montage.

11. Soupape à voies multiple selon l'une des revendications précédentes, **caractérisée en ce que** le raccord (25) menant à la chambre de régulation (31) est, dans toutes les positions de commutation des ensembles à tiroir rotatif (51, 52) est disposé comme entrée pour le réfrigérant et le premier dispositif de soupape à plusieurs voies (21) est disposé du côté haute pression du boîtier (12) et, de préférence, le deuxième dispositif de soupape à plusieurs voies opposé au premier dispositif de soupape à plusieurs voies (21) est disposé du côté basse pression du boîtier (12).

12. Soupape à voies multiple selon l'une des revendications précédentes, **caractérisée en ce que** les premier et deuxième ensembles de soupapes à plusieurs voies (21, 22) présentent le même corps de base (41) et la même interface de raccordement pour l'entraînement (23), de préférence le même entraînement (23).

13. Soupape à voies multiple selon l'une des revendications précédentes, **caractérisée en ce que** le premier et le deuxième agencements de soupapes à plusieurs voies (21, 22) présentent, entre le corps de base (41) et l'agencement de tiroirs rotatifs (51, 52), un entraîneur (53) qui est commandé en rotation par l'arbre (43) et qui commande respectivement un tiroir rotatif (54, 55) des dispositifs à tiroir rotatif (51, 52).

14. Soupape à voies multiple selon l'une des revendications précédentes, **caractérisée en ce que** le premier ensemble de soupape à plusieurs voies (21) peut être inséré dans la chambre de régulation (31) et le raccord (25) conçu comme une entrée peut être mis sous pression et le réfrigérant est transféré dans l'un ou les deux canaux (34, 35) et que le dispositif à tiroir rotatif (51) du premier dispositif de soupape à plusieurs voies (21) est formé par le premier tiroir rotatif (54) et un deuxième support de tiroir rotatif (56) qui est maintenu de préférence sous la pression du réfrigérant en appui contre le fond de la chambre de régulation (31).

15. Soupape à voies multiple selon l'une des revendications précédentes, **caractérisée en ce que** l'agencement de tiroirs rotatifs (52) du deuxième agencement de soupape à plusieurs voies (22) est conçu pour un sens d'écoulement du fluide frigorigène à partir des deux canaux d' (34, 35) vers la chambre de régulation (32) et agit d'abord sur le deuxième support de tiroir rotatif (57) et, de préférence, le deuxième support de tiroir rotatif (57) de l'agencement de tiroir rotatif (52) du deuxième agencement de soupape à plusieurs voies (22) comporte deux douilles de raccordement qui peuvent être insérées au moins partiellement dans les canaux (34, 35) et sont de préférence guidées de manière à pouvoir se déplacer longitudinalement dans les canaux (34, 35) et sont respectivement étanchéifiées par rapport aux canaux (34, 35) par des joints d'étanchéité, et de préférence les faces frontales des douilles de raccordement tournées vers les canaux (34, 35) présentent des biseaux d'introduction (77).
